# EUROPÄISCHE PATENTSCHRIFT

(11) **EP 1 212 821 B1**
(45) Veröffentlichungstag und Bekanntmachung des Hinweises auf die Patenterteilung: **22.07.2009**
(21) Anmeldenummer: 00963906.3
(22) Anmeldetag: 16.08.2000
(51) Int. Cl.: H02H 3/33

(54) **ALLSTROMSENSITIVE FEHLERSTROM-SCHUTZEINRICHTUNG**
RESIDUAL CURRENT DEVICE SENSITIVE TO UNIVERSAL-CURRENT
DISPOSITIF DE PROTECTION CONTRE LES COURANTS DE FUITE SENSIBLE A TOUT COURANT

(30) Priorität: 13.09.1999 DE 19943802
(43) Veröffentlichungstag der Anmeldung: 12.06.2002
(73) Patentinhaber: SIEMENS AKTIENGESELLSCHAFT, 80333 München (DE)
(72) Erfinder: BAUER, Bernhard, 93053 Regensburg (DE)
(86) Internationale Anmeldenummer: PCT/DE2000/002768
(87) Internationale Veröffentlichungsnummer: WO 2001/020741

(56) Entgegenhaltungen:
- DE-U- 29 705 030
- GB-A- 2 176 069

## Beschreibung

Die Erfindung betrifft eine allstromsensitive Fehlerstrom-Schutzeinrichtung mit einem Summenstromwandler, mit einer Steuerwicklung um den Summenstromwandler, die mit einem Wechselspannungsgenerator verbunden ist, und mit einer mit dem Summenstromwandler verbundenen Auswerteeinheit. Die Erfindung betrifft weiterhin ein Verfahren zur Erfassung eines Fehlerstroms mit einer Fehlerstrom-Schutzeinrichtung, bei dem ein glatter Gleichfehlerstrom sowie ein Wechselfehlerstrom / pulsierender Gleichfehlerstrom unabhängig voneinander erfasst werden.

Die Fehlerstrom-Schutzeinrichtung wird in elektrischen Anlagen zum Schutz des Menschen vor gefährlichen Körperströmen eingesetzt. Sie wird auch als Schutzschalter oder Schutzschalterzusatz bezeichnet, je nachdem ob es sich um ein eigenständiges Gerät oder einen Zusatzbaustein für ein Schaltgerät handelt. Bei den Schutzschaltern unterscheidet man den netzspannungsunabhängigen, sogenannten FI-Schalter (Fehlerstrom-Schutzschalter), von dem netzspannungsabhängigen DI-Schutzschalter (Differenzstrom-Schutzschalter). Beide Typen weisen einen Summenstromwandler auf, durch den die Leiter eines Leiternetzes geführt sind. Um den Summenstromwandler ist eine Sekundärspule (auch als Steuerwicklung bezeichnet) gewickelt, an die eine Auswerteeinheit angeschlossen ist, welche wiederum mit einem Auslöser verbunden ist. Tritt im Leiternetz ein unzulässiger Fehlerstrom auf, so wird dieser vom Summenstromwandler mit der dazugehörigen Auswerteeinheit erfasst. Über den Auslöser wird eine Schaltmechanik betätigt, wodurch die Leiter des Leiternetzes getrennt werden.

Beim Fehlerstrom unterscheidet man zwischen dem glatten Gleichfehlerstrom und dem pulsierenden Gleichfehlerstrom sowie dem Wechselfehlerstrom.

Bei Auftreten des pulsierenden Gleichfehlerstroms oder des Wechselfehlerstroms wird in der Sekundärspule eine Spannung induziert, die durch die Auswerteeinheit ausgewertet wird. Zur Erfassung dieser beiden Stromarten kann also die magnetische Induktion herangezogen werden.

Bei Auftreten eines glatten Gleichfehlerstroms ist dieses Messprinzip jedoch nicht anwendbar, da sich der magnetische Fluss durch die Sekundärspule nicht ändert und damit keine Spannung induziert wird. Zur Erfassung eines glatten Gleichfehlerstroms wird daher nach einem anderen Prinzip verfahren, und zwar wird die Sekundärspule mit einer Wechselspannung beaufschlagt, so dass der Kern des Summenstromwandlers wechselweise magnetisiert wird. Der Kern wird also durch die Wechselspannung ausgesteuert. Tritt nun ein Gleichfehlerstrom auf, so verschiebt sich die Magnetisierung des Kerns, welche letztendlich von der Auswerteeinheit erfasst wird. Dieses Prinzip ist beispielsweise bekannt, aus dem Artikel "Alle Fehlerströme im Griff" aus DRIVE AND CONTROL, Heft 4/93, S. 22-25 und wird dort als gesteuerte Induktivität bezeichnet.

Zur Erfassung eines glatten Gleichfehlerstroms und eines pulsierenden Gleichfehlerstroms/Wechselfehlerstroms werden in der Regel zwei unterschiedliche Erfassungsprinzipien mit getrennten Summenstromwandlern verwendet. Dabei wird ein Erfassungsprinzip als pulsstromsensitiv bezeichnet, wenn es zur Erfassung eines Wechselfehlerstroms sowie eines pulsierenden Gleichfehlerstroms ausgelegt ist. Als gleichstromsensitiv wird ein Erfassungsprinzip bezeichnet, wenn es zur Erfassung eines Gleichfehlerstroms geeignet ist. Eine pulsstromsensitive Erfassung ist sowohl netzspannungsunabhängig als auch netzspannungsabhängig realisierbar, während bei gleichstromsensitiven Erfassungsprinzipien nur netzspannungsabhängige Lösungen in Frage kommen, da praxistaugliche gleichstromsensitive Fehlerstromerfassungsprinzipien eine mit einer Wechselspannung angeregte Steuerwicklung aufweisen.

Das Prinzip der gesteuerten Induktivität kann auch bei pulsstromsensitiven Schutzschaltern eingesetzt werden. Mit diesem Prinzip lasse sich daher alle Arten von Fehlerströmen erfassen. In der DE 36 42 393 A1 wird auf einen nach diesem Prinzip arbeitenden DI-Schalter hingewiesen, der als allstromsensitiv bezeichnet wird. Allstromsensitiv bedeutet hierbei jedoch nicht, dass mit einem Schalter nach dem Prinzip der gesteuerten Induktivität die unterschiedlichen Fehlerstromarten unabhängig voneinander erfasst werden können. Durch die Erfassung aller Fehlerströme mit nur einem Prinzip wird die Einhaltung der vorschriftenkonformen Auslösebedingungen für die unterschiedlichen Fehlerstromformen wesentlich erschwert.

Um dieses Problem zu umgehen und eine getrennte Erfassung von unterschiedlichen Fehlerstromarten zu ermöglichen, sieht der genannte Artikel "Alle Fehlerströme im Griff" die Anordnung eines FI-Schalters mit einer Zusatzeinheit für die Erfassung von glatten Gleichfehlerströmen vor. Somit wird eine allstromsensitive Fehlerstrom-Schutzeinrichtung erhalten, bei der zwei Summenstromwandler mit jeweils zugeordneter Auswerteeinheit vorliegen. Dabei arbeitet der erste Summenstromwandler nach dem Induktionsprinzip und der zweite Summenstromwandler nach dem Prinzip der gesteuerten Induktivität. Dieser Aufbau weist den Nachteil auf, dass er einen hohen Raumbedarf besitzt und relativ kostenintensiv ist.

Aus der GB-A-2176069 ist ein Fehlerstromschutzschalter zu entnehmen, bei dem mittels eines Summenstromwandlers sowohl glatte Gleichfehlerströme als auch Wechselfehlerströme erfasst werden. Jedoch sind für die Auswertung der beiden Fehlerstromarten zwei getrennte Auswerteschaltungen notwendig. Dabei ist die Auswerteschaltung für die Erfassung der Gleichfehlerströme als eine netzspannungsabhängige Elektronikschaltung und die für die Erfassung der Wechselfehlerströme als eine netzspannungsunabhängige Energiespeicherschaltung ausgebildet. Damit ist insgesamt eine aufwändige Auswerteanordnung erforderlich.

Der Erfindung liegt die Aufgabe zu Grunde, eine allstromsensitive Differenzstrom-Schutzeinrichtung anzugeben, welche einfach und kompakt ausgeführt ist und zuverlässig arbeitet.

Die auf die Schutzvorrichtung bezogene Aufgabe wird gemäß der Erfindung gelöst mit den Merkmalen des Patentanspruchs 1. Bei der Schutzvorrichtung ist dabei zur Erfassung eines glatten Gleichfehlerstroms und eines Wechselfehlerstroms/pulsierenden Gleichfehlerstroms nur ein einziger Summenstromwandler vorgesehen. Die unabhängige Erfassung der unterschiedlichen Stromarten wird dadurch gewährleistet, dass zur Erfassung des Wechselfehlerstroms/pulsierenden Gleichfehlerstroms die Auswerteeinheit zur Auswertung einer in der Steuerwicklung induzierten Spannung ausgebildet ist. Diese beiden Stromarten werden also nach dem Prinzip der magnetischen Induktion erfasst. Gleichzeitig ist die Auswerteeinheit zur Erfassung des glatten Gleichfehlerstroms zur Auswertung der durch den Gleichfehlerstrom hervorgerufenen Änderung im Magnetisierungszustand des Kerns des Summenstromwandlers ausgebildet. Die Erfassung eines Gleichfehlerstromwandlers erfolgt daher im Wesentlichen nach dem Prinzip der gesteuerten Induktivität.

Ein der Schutzvorrichtung zu Grunde liegender Gedanke ist darin zu sehen, die zwei unterschiedlichen Messprinzipien gleichzeitig anzuwenden und dabei nur einen Summenstromwandler mit nur einer Sekundärwicklung oder Steuerwicklung vorzusehen. Dies hat den Vorteil, dass die Schutzvorrichtung insgesamt wesentlich einfacher und kompakter und damit auch kostengünstiger aufgebaut werden kann. Da zwei unterschiedliche Messprinzipien herangezogen werden, können die Fehlerstromarten unabhängig voneinander erfasst werden. Es wird somit die Einhaltung der durch die Vorschriften geforderten Auslösefehlerstromgrenzen gewährleistet.

Erfindungsgemäß umfasst die Auswerteeinheit einen Kondensator, der mit der Steuerwicklung einen Parallelresonanzkreis bildet, wobei dessen Resonanzfrequenz vorzugsweise auf die Generatorfrequenz abgestimmt ist, so dass der Resonanzkreis einen hochohmigen Widerstand bildet. Bei einer Änderung der Induktivität der Spule, hervorgerufen durch einen Änderung in der Magnetisierung, ist die Resonanzbedingung nicht mehr erfüllt, und der Spulenwiderstand sinkt stark ab. Dies ist am Messwiderstand leicht zu erfassen.

Zur Erhöhung der so genannten Stoßstromfestigkeit ist vorzugsweise parallel zum Resonanzkreis ein spannungsbegrenzendes Element, wie beispielsweise eine Transildiode, sowie ein zwischen Generator und Steuerwicklung angeordnetes Entkopplungsglied, insbesondere ein Widerstand, vorgesehen. Damit wird eine Entkopplung zwischen Steuerwicklung und Frequenzgenerator erreicht, so dass störende Rückwirkungen auf den Frequenzgenerator vermieden sind. Solche Rückwirkungen entstehen beispielsweise auf Grund von Überspannungen in der Steuerwicklung, hervorgerufen durch hohe Stoßströme, die beispielsweise bei Gewitterspannungen durch die Leiter des Netzes fließen.

Für einen möglichst guten Schutz des Generators liegt die Ansprechspannung des spannungsbegrenzenden Elements nur geringfügig oberhalb der Ausgangsspannung des Generators. Die Schutzwirkung tritt daher bereits bei Überspannungen ein, die geringfügig über der Generatorspannung liegen.

Im Folgenden wird der Einfachheit halber unter Wechselfehlerstrom sowohl ein Wechselfehlerstrom als auch ein pulsierender Gleichfehlerstrom verstanden.

Vorzugsweise ist das Kernmaterial des Summenstromwandlers derart ausgebildet, dass der glatte Gleichfehlerstrom oberhalb eines Auslösegleichfehlerstroms zu einer Sättigung des Magnetisierungszustands des Kerns führt, und dass beim Wechselfehlerstrom im Bereich eines Auslösewechselfehlerstroms der Magnetisierungszustand unterhalb der Sättigung ist. Unter Auslösefehlerstrom wird dabei der Fehlerstrom verstanden, ab dem der Schutzschalter auslöst, d.h. die Leiter des Leiternetzes getrennt werden.

Da der Auslösegleichfehlerstrom zu einer Sättigung des Magnetisierungszustands führt, wird an einem Messwiderstand, der der Steuerwicklung nachgeschaltet ist, ein Spannungsanstieg erkennbar. Denn die Induktivität der Steuerwicklung nimmt im Bereich der Sättigung stark ab, was zu einem Absinken des Spulenwiderstands führt. Diese veränderte Charakteristik ist am Messwiderstand erkennbar. Da gleichzeitig der Auslösefehlerwechselstrom keine Aussteuerung bis in die Sättigung bewirkt, ist in vorteilhafter Weise gewährleistet, dass die beiden Auslösefehlerströme unabhängig voneinander einstellbar sind.

Das Kernmaterial weist in einer vorteilhaften Ausgestaltung eine flache Hysterese-Kurve auf. Solche Kerne (Wandlerkerne) werden allgemein als F-Kerne bezeichnet.

Bei gleichstromsensitiven Erfassungsprinzipien werden in der Regel so genannte Z-Kerne verwendet mit einer relativ steilen, Z-förmigen Hysteres-Kurve. Gegenüber den Z-Kernen bietet der F-Kern eine höhere mechanische Stabilität, so dass sich der F-Kern insbesondere auch für den Einsatz in Geräten mit großem Wandlerkerndurchmesser eignet. Zudem wirkt sich die Verwendung eines F-Kerns aufgrund seiner Vormagnetisierungsunabhängigkeit günstig auf die unabhängige Erfassung unterschiedlicher Fehlerstromarten aus.

In einer vorteilhaften Ausgestaltung ist der Kern derart ausgestaltet, dass bei einer Feldstärke, die von einem mit dem Faktor 2 gewichteten Bemessungsfehlerstrom hervorgerufen wird, die Hysterese-Kurve in den Sättigungsbereich einzuknicken beginnt. Bevorzugt liegt dieser Punkt etwa bei dem 0,7-fachen der magnetischen Sättigungsinduktion. Die B-H-Kennlinie weist im Anschluss an diesen Punkt im Allgemeinen einen Knick zum Sättigungsbereich hin auf. Mit einer derartigen Ausgestaltung wird die Anforderung H ≤ 2I_{Δn} • N1/l_{Fe} bei der 0,7-fachen Sättigungsinduktion B_{S} erfüllt. Dabei ist H die magnetische Feldstärke und I_{Δn} der so genannte Bemessungsfehlerstrom, der durch Normen bestimmt ist und die Auslöseempfindlichkeit des Schutzschalters festlegt. N1 ist weiterhin die Primärwicklungszahl, also die Wicklungsanzahl der durch den Summenstromwandler geführten Leiter, und l_{Fe} ist die Eisenweglänge des Summenstromwandlers.

Mit einem derart ausgestalteten Kern wird der Vorteil erzielt, dass bei einem Gleichfehlerstrom, der sich dem doppelten Bemessungsfehlerstrom nähert, der Kern in die Sättigung getrieben wird. Der Kern wird hierbei nämlich zumindest im Bereich des Scheitelwerts seiner Aussteuerung durch die angelegte Wechselspannung in die Sättigung getrieben. Die dadurch bedingte Änderung in der Impedanzcharakteristik der Spule wird über den Messwiderstand erfasst, so dass der Gleichfehlerstrom zum Auslösen des Schutzschalters führt.

Um gleichzeitig bei Wechselfehlerströmen, die den Auslösefehlerstrom überschreiten, ein sicheres Auslösen der Schutzeinrichtung zu gewährleisten, weist der Kern im Arbeitsbereich, d.h. bei der Generatorfrequenz, mit der die Steuerwicklung beaufschlagt wird, und bei einer Feldstärke von etwa 10mA/cm, bevorzugt eine relativ hohe Permeabilität ≥ 50000 auf. Der Arbeitsbereich liegt zur Erfassung des Wechselfehlerstroms weit unterhalb der Sättigungsinduktion. Um eine ausreichend große Induktion in der Steuerwicklung zu erreichen, ist eine steil verlaufende B-H-Kennlinie, d.h. die hohe Permeabilität von Vorteil

In einer zweckdienlichen Ausgestaltung weist die Auswerteeinheit lediglich einen einzigen Messwiderstand auf. Der gemessene Spannungsabfall am Messwiderstand wird sowohl zur Identifizierung eines Gleichfehlerstroms als auch zur Identifizierung eines Wechselfehlerstroms herangezogen. Dies erleichtert die schaltungstechnische Ausgestaltung.

Um beim Einschalten des Generators und dem damit verbundenen Einschwingverhalten ein Auslösen des Schalters zu vermeiden, ist ein Kurzschlussschalter für den Messwiderstand vorgesehen. Die Kurzschlusszeit des Schalters liegt insbesondere unter 10 msec, damit die vorschriftsmäßigen Auslösezeiten nicht überschritten werden. Dies ist insbesondere dann von Bedeutung, wenn beim Einschaltern des Schutzschalters gleichzeitig ein hoher Fehlerstrom auftritt, welcher eine schnelle Abschaltung erfordert.

Insbesondere bei großen Durchmessern des Summenstromwandlers ist es von Vorteil, wenn die Generatorfrequenz auf < 100 Hz eingestellt ist. Üblicherweise wird eine Frequenz von etwa 1 kHz eingestellt. Um die gewünschte Aussteuerung des Kerns zu realisieren, ist bei einer großen Eisenlänge eine hohe Amperewindungszahl (Strom durch die Steuerwicklung (Steuerstrom) multipliziert mit ihrer Windungszahl) erforderlich. Um die Verlustleistung in einem Netzteil mit dem Wechselspannungsgenerator so gering wie möglich zu halten, wird daher vorzugsweise die Windungszahl erhöht und der Steuerstrom so niedrig wie möglich gehalten, mit der Folge, dass die Impedanz der Steuerwicklung ansteigt. Durch die Reduzierung der Frequenz wird die Spulenimpedanz wiederum erniedrigt, so dass mit einer für elektronische Bausteine üblichen Spannung von beispielsweise ± 15V der erforderliche Steuerstrom erzeugt werden kann.

Von besonderem Vorteil bei der Schutzeinrichtung ist, dass die Auswerteeinheit zur Erkennung einer Kurzschlusswicklung um den Summenstromwandler geeignet ist. Eine solche Kurzschlusswicklung entsteht beispielsweise dann, wenn aufgrund eines lastseitigen Fehlers in der Isolation eines so genannten
TN-C-S-Netzes ein Kontakt zwischen dem durch den Summenstromwandler geführten N-Leiter und dem Schutzleiter (PE-Leiter) hergestellt ist. Eine solche Kurzschlusswicklung hat zur Folge, dass die unter Einwirkung der Kurzschlusswicklung messbare Permeabilität deutlich absinkt. Dies lässt sich eindeutig und einfach am Messwiderstand erkennen.

Ein Ausführungsbeispiel wird im Folgenden anhand der Zeichnung erläutert. Es zeigen:
- FIG 1: ein schematisches Blockschaltbild eines Schutz- schalters und
- FIG 2: eine schematische B-H-Kennlinie.

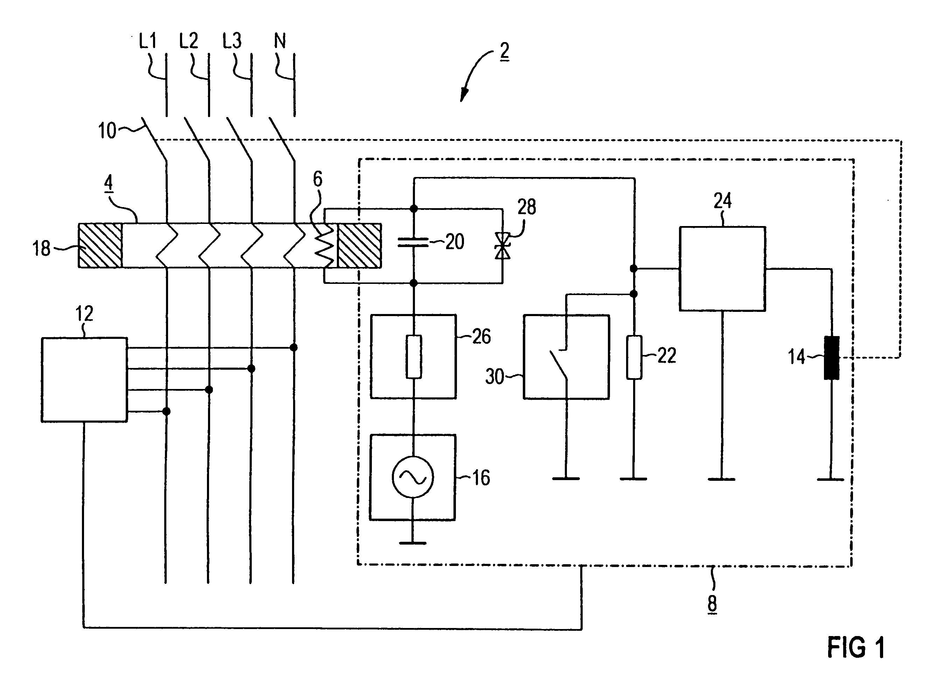

Gemäß FIG 1 umfasst eine Fehlerstrom-Schutzeinrichtung 2 einen Summenstromwandler 4, eine um den Summenstromwandler 4 gewickelte Steuerwicklung 6, eine Auswerteeinheit 8, einen Schaltmechanismus 10 sowie ein Netzteil 12.

Durch den Summenstromwandler 4 sind Leiter L1-L3,N (N für Nullleiter) geführt. Über den Schaltmechanismus 10 können die Leiter L1-L3,N getrennt werden. Im ordnungsgemäßen Zustand, d.h. wenn im Leiternetz kein Fehlerstrom auftritt, ist die Summe der durch den Summenstromwandler 2 fließenden Ströme gleich Null. Eine Abweichung hiervon indiziert, dass ein Fehlerstrom vorliegt.

Das Netzteil 12 versorgt die Auswerteeinheit 8 mit Strom. Die Schutzeinrichtung ist daher als DI-Schutzschalter ausgebildet. Durch die spezielle schaltungstechnische Anordnung der Auswerteeinheit 8 ermöglicht diese, bei nur einem Summenstromwandler 4 und nur einer um den Summenstromwandler 4 gelegten Steuerwicklung 6 sowohl glatte Gleichfehlerströme als auch Wechselfehlerströme/pulsierende Gleichfehlerströme (im Folgenden kurz als Wechselfehlerströme bezeichnet) zu erfassen. Sobald die Auswerteeinheit 8 einen Fehlerstrom identifiziert, der einen bestimmten, vorzugsweise einstellbaren Grenzwert, den sogenannten Auslösefehlerstrom, überschreitet, wirkt die Auswerteeinheit 8 über einen Auslöser 14 auf den Schaltmechanismus 10 und trennt die Leiter L1-L3,N.

Die Auswerteeinheit 8 weist einen Generator 16 auf, der eine Wechselspannung und insbesondere eine sinusförmige Wechselspannung bereitstellt. Der Ausgangswiderstand des Generators 16 ist dabei niederohmig, um eine Spannungseinprägung zu realisieren. Der Generator 16 versorgt die Steuerwicklung 6 mit der Sinusspannung. Dies führt zu einer wechselweisen Magnetisierung des Kerns 18 des Summenstromwandlers 4. Der Kern 18 (auch als Wandlerkern bezeichnet) befindet sich also in einem wechselmagnetisierten Zustand, wobei sich die Magnetisierung mit der vom Generator 16 bereitgestellten Generatorfrequenz periodisch ändert. Parallel zur Steuerwicklung 6 ist ein Kondensator 20 geschaltet, der zusammen mit der Steuerwicklung 6 einen Parallelresonanzkreis bildet. Dieser ist insbesondere auf die Generatorfrequenz abgestimmt, so dass der Parallelresonanzkreis im normalen Betriebszustand, wenn kein Fehlerstrom vorliegt, einen hochohmigen Widerstand bildet.

In Serie zum Parallelresonanzkreis ist ein Messwiderstand 22 angeordnet. Der Spannungsabfall am Messwiderstand 22 wird in einer Auswerteschaltung 24 ausgewertet. Bei Vorliegen eines Auslösekriteriums wirkt die Auswerteschaltung 24 auf den Auslöser 14 ein, welcher den Schaltmechanismus 10 betätigt.

Die wesentlichen Bestandteile der Auswerteeinheit 8 zur unabhängigen Erfassung von glatten Gleichfehlerströmen sowie Wechselfehlerströmen sind der Generator 16, der von der Steuerwicklung 6 und dem Kondensator 20 gebildete Parallelresonanzkreis sowie der Messwiderstand 22. Der Generator 16 sorgt für eine bipolare Aussteuerung der Steuerwicklung 6. Die Wirkungsweise lässt sich folgendermaßen erläutern: Im Normalfall, d.h. wenn keine Fehlerströme durch den Summenstromwandler 4 fließen, bildet der Parallelresonanzkreis einen hochohmigen Widerstand, so dass der Spannungsabfall am Messwiderstand 22 nahezu Null ist. Der Messwiderstand 22 ist im Vergleich zum Parallelresonanzkreis niederohmig ausgebildet. Bei Auftreten eines glatten Gleichfehlerstroms verschiebt sich die Magnetisierung des Kerns 18 und erreicht eine Sättigung, wenn der Gleichfehlerstrom einen Grenzwert überschreitet. Im Sättigungszustand ist die Permeabilität deutlich niedriger und damit auch die Induktivität der Steuerwicklung 6. Damit verschiebt sich die Resonanzfrequenz des Parallelresonanzkreises. Die Resonanzbedingung ist nicht mehr erfüllt und der Widerstand der Spule verringert sich deutlich. Der Parallelresonanzkreis ist also insgesamt niederohmiger, so dass die Spannung am Messwiderstand 22 messbar erhöht ist.

Zur Erfassung des Wechselfehlerstroms wird im Gegensatz zur Erfassung des glatten Gleichfehlerstroms die Sättigungsgrenze des Kerns 18 nicht überschritten. Damit wird gewährleistet, dass die beiden Fehlerstromarten, nämlich der glatte Gleichfehlerstrom und der Wechselfehlerstrom, unabhängig voneinander erfasst werden. Die Erfassung des Wechselfehlerstroms beruht dabei auf dem Induktionsprinzip. Bei Auftreten eines Wechselfehlerstroms wird in der Steuerwicklung 6 eine Spannung induziert. Die Steuerwicklung 6 bildet also eine zusätzliche Spannungsquelle neben dem Generator 16. Dies führt am Messwiderstand 22 zu einem veränderten Spannungsabfall, der von der Auswerteschaltung 24 erfasst wird.

Ein wesentlicher Gesichtspunkt ist darin zu sehen, dass die Auslösewechselfehlerströme, also die Wechselfehlerströme, ab denen der Schutzschalter auslöst, nicht zu einer Sättigung der Magnetisierung führen. Da die Auslösegleichfehlerströme eine solche Sättigung bewirken, können glatte Gleichfehlerströme und Wechselfehlerströme/pulsierende Gleichfehlerströme unabhängig voneinander erfasst werden. Unabhängig bedeutet hierbei, dass der Auslösewechselfehlerstrom unabhängig ist von überlagerten Gleichfehlerströmen bis knapp unterhalb der Auslösegrenze (also unterhalb des Auslösegleichfehlerstroms). Erst bei einem Gleichfehlerstrom knapp unterhalb der Auslösegrenze, der eine Auslösung noch nicht bewirkt, ist der Auslösewechselfehlerstrom kleiner, wenn gleichzeitig ein Wechselfehlerstrom auftritt. Dies ist dadurch bedingt, dass durch die Überlagerung der beiden Fehlerströme die Sättigungsgrenze überschritten wird, so dass der Schutzschalter bei einem niedrigen Auslösewechselfehlerstrom auslöst. Nur in diesem Spezialfall gehen also die beiden Erfassungsprinzipien, nämlich das Induktionsprinzip und das Prinzip der gesteuerten Induktivität (auch als Prinzip der Feldstärkeüberhöhung bezeichnet) ineinander über. Für den Fall, dass die Dimensionierung so erfolgt, dass der Auslösegleichfehlerstrom in etwa in der Mitte des durch Normen festgelegten zulässigen Bereiches liegt, ist dieser Spezialfall für die Praxis ohne Belang und verursacht bezüglich der Einhaltung der Auslösefehlerstromgrenzen nach Vorschrift keine Probleme.

Neben den bereits beschriebenen Elementen weist die Auswerteeinheit 8 weiterhin ein Entkopplungsglied 26, beispielsweise einen ohmschen Widerstand, ein spannungsbegrenzendes Element 28, beispielsweise eine Transildiode, sowie einen Kurzschlusschalter 30 auf. Das spannungsbegrenzende Element 28 ist bidirektional ausgestaltet und parallel zum Parallelresonanzkreis geschaltet. Die Transildiode ist insbesondere für hohe Spannungen und Ströme ausgelegt und ist daher geeignet, die Schaltanordnung stoßstromfest auszuführen. Die Stoßstromfestigkeit wird durch die Anordnung der Transildiode in Kombination mit dem Entkopplungsglied 26 erreicht, über das die Spannungsquelle, nämlich der Generator 16, von der Steuerwicklung 6 entkoppelt wird. Die Stoßstromfestigkeit ist insbesondere in Industrieanlagen erforderlich, bei denen hohe Stoßströme in den Leitern L1-L3,N auftreten können. Ein solcher Stoßstrom induziert in der Steuerwicklung 6 eine Spannung, welche durch die Transildiode auf deren Stoßansprechspannung begrenzt wird. Ohne Entkopplung des Generators 16 würde diese Stoßansprechspannung eine äußerst störende Rückwirkung zum Generator 16 bilden. Das Entkopplungsglied 26 wirkt daher als ein Dämpfungsglied. Sein Widerstand sollte deutlich unterhalb des Widerstands des Parallelresonanzkreises im Falle der Resonanzfrequenz sein, um die Spannungseinprägung des Generators auf die Steuerwicklung zu gewährleisten, und um bei Auftreten eines Gleichfehlerstroms ein deutliches Messsignal am Messwiderstand 22 zu erhalten.

Da der Generator 16 beim Einschalten eine gewisse Zeit benötigt, um eine gleichmäßige Sinus-Wechselspannung bereitzustellen, muss während der Dauer des Einschwingvorgangs gewährleistet sein, dass der Schalter nicht auslöst. Hierzu ist der Kurzschlussschalter 30 vorgesehen, der den Messwiderstand 22 während des Einschwingvorgangs überbrückt. Die Kurzschlusszeit liegt dabei insbesondere deutlich unterhalb der minimalen Auslösezeitgrenze bei Auftreten eines Auslösefehlerstroms. Damit ist gewährleistet, dass der DI-Schutzschalter auch beim Einschaltvorgang innerhalb der vorgeschriebenen Zeiten auslöst. Der Kurzschlussschalter 30 ist bevorzugt als Transistor ausgebildet und besitzt eine Kurzschlusszeit, die vorzugsweise bei ≤ 10 msec liegt.

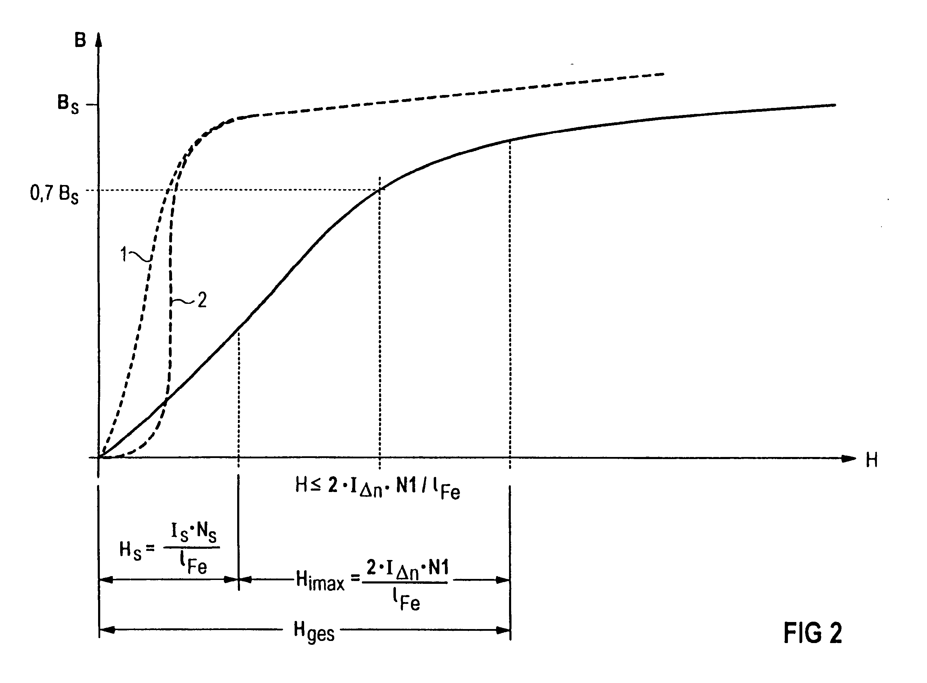

In FIG 2 ist die magnetische Induktion B gegenüber der magnetischen Feldstärke H aufgetragen. Die durchgezogene Linie entspricht dem typischen B-H-Verlauf eines Kerns 14 mit einer flachen Hysterese-Kurve. Ein solcher Kern wird allgemein als F-Kern bezeichnet. Zum Vergleich ist in FIG 2 die typische Kennlinie eines sogenannten Z-Kerns gestrichelt dargestellt. Die B-H-Kennlinie des Z-Kernes ist im Bereich kleinerer Feldstärken unterhalb der Sättigung stark abhängig von der Vormagnetisierung und von mechanischen Spannungen im Kern. Kennlinie 1 zeigt den Verlauf im entmagnetisierten Zustand, Kennlinie 2 im aufmagnetisierten Zustand. Aufgrund des undefinierten Verlaufes der B-H-Kennlinie im unteren Feldstärkebereich ist der Z-Kern für die Anwendung des Induktionsprinzipes im Bereich unterhalb der Sättigung zur Fehlerstromerfassung nicht geeignet. Die Steigung der B-H-Kurve wird von der feldstärkeabhängigen Permeabilität bestimmt. Während bei kleinen Feldstärken die Permeabilität mit zunehmender Feldstärke annähernd konstant bleibt, oder ansteigt, fällt sie bei großen Feldstärken, wenn die Sättigungsinduktion Bₛ erreicht wird, stark ab. Wenn die Induktion das 0,7-fache der Sättigungsinduktion B_{S} überschreitet, beginnt die B-H-Kennlinie abzuknicken bzw. die Permeabilität abzufallen.

Die von einem Fehlerstrom hervorgerufene magnetische Feldstärke H ist proportional zu dem Fehlerstrom. Der Kern 18 des Summenstromwandlers 2 ist vorzugsweise derart ausgebildet, dass bei Erreichen des Auslösegleichfehlerstroms die Magnetisierung beginnt in den Sättigungszustand überzugehen. Der Auslösegleichfehlerstrom ist korreliert mit dem sogenannten Bemessungsfehlerstrom I_{Δn}. Letzterer ist durch Normen festgelegt und definiert die Auslöseempfindlichkeit eines Schutzschalters. Die Bemessungsfehlerströme I_{Δn} betragen für unterschiedliche Schutzschalter beispielsweise 30 mA, 300 mA oder 500 mA. In Abhängigkeit des Bemessungsfehlerstroms I_{Δn} ist zugleich über Normen festgelegt, in welchem Bereich der Auslösefehlerstrom liegen muss, damit der Schutzschalter die Norm erfüllt. Für Wechselfehlerströme ist der Auslösebereich auf das 0,5-fache bis 1-fache des Bemessungsfehlerstroms I_{Δn} festgelegt. Glatten Gleichfehlerströmen ist demgegenüber ein Auslösebereich vom 0,5 bis zum 2-fachen des Bemessungsfehlerstroms I_{Δn} zugeordnet. Bei glatten Gleichfehlerströmen wird daher bei gleichem Bemessungsfehlerstrom I_{Δn} ein im Vergleich zu Wechselfehlerströmen doppelt so hoher Auslösefehlerstrom toleriert.

Für die Erfassung des Gleichfehlerstromes wird der Kern 18 bis in die beginnende Sättigung ausgesteuert. Die für die Aussteuerung des Kerns 18 ursächliche Feldstärke H_{ges} setzt sich zusammen aus der Feldstärke H_{S}, die durch den in der Steuerwicklung 6 fließenden Steuerstrom Iₛ erzeugt wird, und der durch den Gleichfehlerstrom verursachten Feldstärke Hᵢ. Im Hinblick auf die maximale Auslösegrenze beträgt letztere maximal Hᵢₘₐₓ = 2 · I_{Δn} · N1/l_{Fe}. N1 entspricht hierbei der Primärwindungszahl bzw. der Windungszahl der Leiter des Netzes L1-L3, N am Summenstromwandler und l_{Fe} der Eisenweglänge des Kerns 18. Die durch den Generator 16 über die Steuerwicklung 6 verursachte.Aussteuerung des Kernes 18 wird aus Gründen der Temperaturabhängigkeit der B-H-Kennlinie des Kernes im Vergleich zu der durch den Auslösefehlerstrom erzeugten Feldstärke vorteilhafterweise gering gehalten. Hierzu genügt der Kern 18 der Bedingung H ≤ 2 · I_{Δn} · N1/l_{Fe} bei dem 0,7-fachen der Sättigungsinduktion, so dass die beginnende Sättigung bei einem vorgegebenen Nennfehlerstrom erreicht wird.

Da die Auslösegrenze für Wechselfehlerströme im linearen Bereich der B-H-Kurve liegt, ist ein ausreichend steiler Anstieg der Kurve wünschenswert, um bei Auftreten eines Wechselfehlerstroms eine ausreichend hohe magnetische Induktion B zu erzielen, um ein eindeutiges Messsignal am Messwiderstand 22 zu erhalten. Hierzu sollte zur Erfassung von Fehlerströmen bis einschließlich 3A Nennfehlerstrom die Permeabilität im Arbeitspunkt, also typischerweise bei einer magnetischen Feldstärke H von 10 mA/cm, ≥ 50000 sein. Als vorteilhaft hat sich beispielsweise bei 300mA Nennfehlerstrom ein Bereich zwischen 110000 und 160000 herausgestellt. Die Werte sind jeweils bezogen auf die Frequenz des Generators 16.

Die Kombination dieser Anforderung, nämlich zum einen die Höhe der Permeabilität und zum anderen die Lage des Knickpunkts in der B-H-Kennlinie, lassen sich mit dem F-Kern in vorteilhafter Weise erzielen. Zusätzlich ist der F-Kern gegenüber dem bei einem DI-Schalter üblicherweise verwendeten Z-Kern mechanisch stabiler. Dies ermöglicht den problemlosen Einsatz eines F-Kerns in Summenstromwandlern 2 mit großem Durchmesser des Kerns 18, wie sie bei Leitern L1 bis L3,N notwendig sind, die für hohe Nennströme, beispielsweise > 100A, ausgelegt sind und daher einen großen Leiterquerschnitt aufweisen. Ein großer Kerndurchmesser und eine hohe Permeabilität (≥ 50000) führen dazu, dass die Induktivität und damit die Impedanz der Steuerwicklung 6 stark ansteigt. Um einen ausreichend großen Steuerstrom durch die Steuerwicklung 6 zu führen, muss die Generatorspannung entsprechend groß sein. Um die Generatorspannung niedrig zu halten, wird der Generator vorzugsweise mit einer relativ niedrigen Frequenz, beispielsweise ≤ 100 Hz, betrieben. Diese Frequenz liegt bei herkömmlichen Schutzschaltern für die Erfassung von glatten Gleichfehlerströmen deutlich höher und etwa im Bereich von 1 kHz.

Die beschriebene Schaltungsanordnung ermöglicht in Verbindung mit der Auswahl des speziellen Kernmaterials ein sicheres Erfassen von glatten Gleichfehlerströmen und Wechselfehlerströmen/pulsierenden Gleichfehlerströmen, wobei auf Grund der beiden unterschiedlichen Auswerteprinzipien die verschiedenen Stromarten unabhängig voneinander erfasst werden können.

Sie eignet sich darüber hinaus in vorteilhafterweise auch für die Erfassung einer Kurzschlusswicklung um den Summenstromwandler 4. Eine solche Kurzschlusswicklung tritt beispielswiese in einem TN-C-S-Netz bei einem lastseitigen Kontakt zwischen dem durch den Summenstromwandler 4 geführten Nullleiter N und dem außen am Summenstromwandler vorbeigeführten Schutz-/PE-Leiter im Fehlerfall auf. Der in der Kurzschlusswicklung induzierte Strom wirkt der über die Steuerwicklung 6 erzeugten Erregung entgegen. Die für die Kernaussteuerung wirksame Feldstärke wird dadurch stark verringert. Die unter Einwirkung der Kurzschlusswicklung messbare B-H Kennlinie verläuft also sehr flach, und die von der Auswerteeinheit über den Spannungsabfall am Messwiderstand 22 erfassbare Permeabilität wird stark reduziert bzw. tendiert bei einer sehr niederohmigen Kurzschlusswicklung gegen 1.

## Patentansprüche

1. Allstromsensitive Fehlerstrom-Schutzeinrichtung (2) mit einem Summenstromwandler (4), mit einer Steuerwicklung (6) um den Summenstromwandler (4), die mit einem Wechselspannungs-Generator (16) verbunden ist, und mit einer mit dem Summensstromwandler (4) verbundenen Auswerteinheit (8), wobei zur unabhängigen Erfassung eines glatten Gleichfehlerstroms und eines Wechselfehlerstroms/pulsierenden Gleichfehlerstroms ein einziger Summenstromwandler (4) vorgesehen ist, dass zur Erfassung des Wechselfehlerstroms/pulsierenden Gleichfehlerstroms die Auswerteeinheit (8) zur Auswertung einer in der Steuerwicklung (6) induzierten Spannung ausgebildet ist, und dass zur Erfassung des glatten Gleichfehlerstroms die Auswerteeinheit (8) zur Auswertung der durch den Gleichfehlerstrom hervorgerufene Änderung im Magnetisierungszustand des Kerns (18) des Summenstromwandlers (4) ausgebildet ist,
**dadurch gekennzeichnet,**
**dass** die Auswerteeinheit (8) einen Kondensator (20) umfasst, der mit der Steuerwicklung (6) einen Parallelresonanzkreis bildet.

2. Schutzeinrichtung nach Anspruch 1, **dadurch gekennzeichnet, dass** die B-H-Kennlinie des Kerns (18) bezogen auf die Frequenz des Generators (16) derart verläuft, dass bei einer Feldstärke (Hi), die von einem mit dem Faktor 2 gewichteten Bemessungsfehlerstrom (I_{Δn}) hervorgerufen wird, die Hysterese-Kurve in den Sättigungsbereich einzuknicken beginnt.

3. Schutzeinrichtung nach einem der vorhergehenden Ansprüche, **dadurch gekennzeichnet, dass** der Kern (18) bei der Frequenz des Generators (16) und bei einer Feldstärke (H) von etwa 10 mA/cm eine Permeabilität ≥ 50000 aufweist.

4. Schutzeinrichtung nach einem der vorhergehenden Ansprüche, **dadurch gekennzeichnet, dass** der Kern (18) als F-Kern mit einer flachen Hysterese-Kurve ausgebildet ist.

5. Schutzeinrichtung nach einem der vorhergehenden Ansprüche, **dadurch gekennzeichnet, dass** die Resonanzfrequenz des Parallelresonanzkreises auf die Generatorfrequenz (f_{gen}) abgestimmt ist.

6. Schutzeinrichtung nach Anspruch 5, **dadurch gekennzeichnet, dass** parallel zum Resonanzkreis ein spannungsbegrenzendes Element (28), insbesondere eine Transildiode, sowie zwischen Generator (16) und Steuerwicklung (6) ein Entkopplungsglied (26), insbesondere ein Widerstand, vorgesehen sind.

7. Schutzeinrichtung nach Anspruch 6, **dadurch gekennzeichnet, dass** die Ansprechspannung des spannungsbegrenzenden Elements (28) geringfügig oberhalb der Ausgangsspannung des Generators (16) liegt.

8. Schutzeinrichtung nach einem der vorhergehenden Ansprüche, **dadurch gekennzeichnet, dass** die Auswerteeinheit (8) zum Erkennen sowohl des glatten Gleichfehlerstroms als auch des Wechselfehlerstroms/pulsierenden Gleichfehlerstroms einen gemeinsamen Messwiderstand (22) aufweist.

9. Schutzeinrichtung nach Anspruch 8, **dadurch gekennzeichnet, dass** der Messwiderstand (22) über einen Kurzschlussschalter (309, insbesondere über einen Transistor, kurzzeitig kurzschließbar ist, wobei die Kurzschlusszeit insbesondere kleiner oder gleich 10 msec ist.

10. Schutzeinrichtung nach einem der vorhergehenden Ansprüche, **dadurch gekennzeichnet, dass** die Frequenz des Generators (16) ≤ 100 Hz beträgt.

11. Schutzeinrichtung nach einem der vorhergehenden Ansprüche, **dadurch gekennzeichnet, dass** das Material des Kerns (18) derart beschaffen ist, dass der glatte Gleichfehlerstrom oberhalb eines Auslösegleichfehlerstroms zu einer Sättigung des Magnetisierungszustands des Kerns (18) führt, und dass beim Wechselfehlerstrom/pulsierenden Gleichfehlerstrom im Bereich eines Auslösewechselfehlerstroms der Magnetisierungszustand unterhalb der Sättigung ist.

## Claims

1. Residual current device sensitive to universal current (2) with a residual current converter (4), with a control coil (6) around the residual current converter (4), which is connected to an AC voltage generator (16), and with an evaluation unit (8) connected to the residual current converter (4), whereby for independent detection of a smooth direct error current and an alternating error current/pulsing direct error current a single residual current converter (4) is provided, that for detection of the alternating error current/pulsing direct error current the evaluation unit is embodied for evaluation of a voltage induced in the control coil (6) and that for detection of the smooth direct error current, the evaluation unit (8) is embodied for evaluation of the change caused by the direct error current in the magnetisation state of the core (18) of the residual current converter (4),
**characterised in that**
The evaluation unit (8) comprises a capacitor (20), which with the control coil (6) forms a parallel resonant circuit.

2. Residual current device according to claim 1, **characterised in that** the B-H characteristic curve of the core (18), related to the frequency of the generator (16), runs such that with a field strength (Hᵢ) which is produced by a rated error current (I_{Δn}) weighted with the factor 2, the hysteresis curve begins to kink down into the saturation area.

3. Residual current device according to one of the previous claims, **characterised in that** the core (18), for the frequency of the generator (16) and with a field strength (H) of around 10 mA/cm, exhibits a permeability of ≥ 50000.

4. Residual current device according to one of the previous claims, **characterized in that** the core (18) is embodied as an F core with a flat hysteresis curve.

5. Residual current device according to one of the previous claims, **characterised in that** the resonant frequency of the parallel resonant circuit is tuned to the generator frequency (f_{gen}).

6. Residual current device according to claim 5, **characterised in that,** in parallel to the resonant circuit, a voltage limiting element (28), especially a Transil diode, and also between the generator (16) and control winding (6), a decoupling element (26), especially a resistor, are provided.

7. Residual current device according to claim 6, **characterised in that** the trigger voltage of the voltage limiting element (28) lies slightly above the output voltage of the generator (16).

8. Residual current device according to one of the previous claims, **characterised in that** the evaluation unit (8) to detect both the smooth direct error current and also the alternating error current/pulsing direct error current, features a common measurement resistor (22).

9. Residual current device according to claim 8, **characterised in that** the measurement resistor (22) is able to be shortcircuited for a short period via a short circuit switch (30), with the short-circuit time especially being less than or equal to 10 msec.

10. Residual current device according to one of the previous claims, **characterised in that** the frequency of the generator (16) amounts to ≤ 100 Hz.

11. Residual current device according to one of the previous claims, **characterised in that** the material of the core (18) is created such that the smooth direct error current, above a triggering direct error current, leads to a saturation of the magnetisation state of the core (18), and that with an alternating error current/pulsing error current in the range of a triggering alternating error current the magnetisation state is below the saturation

## Revendications

1. Dispositif de protection contre les courants de fuite (2) sensible à tous courants, comprenant un transformateur de courant totalisé (4), comprenant un enroulement de commande (6) autour du transformateur de courant totalisé (4), qui est raccordé à un générateur de tension alternative (16), et comprenant une unité d'évaluation (8) raccordée au transformateur de courant totalisé (4), un unique transformateur de courant totalisé (4) étant ménagé pour la saisie autonome d'un courant de fuite continu lisse et d'un courant de fuite alternatif/d'un courant de fuite continu pulsé, l'unité d'évaluation (8) étant réalisée pour évaluer une tension induite dans l'enroulement de commande (6) dans le but de saisir le courant de fuite alternatif/le courant de fuite continu pulsé, et l'unité d'évaluation (8) étant réalisée pour évaluer la modification causée par le courant de fuite continu à l'état de magnétisation du noyau (18) du transformateur de courant totalisé (4) dans le but de saisir le courant de fuite continu lisse,
**caractérisé en ce**
**que** l'unité d'évaluation (8) comprend un condensateur (20) qui, avec l'enroulement de commande (6), forme un circuit de résonance parallèle.

2. Dispositif de protection selon la revendication 1, **caractérisé en ce que** la caractéristique B-H du noyau (18) par rapport à la fréquence du générateur (16) est telle qu'avec une intensité du champ (Hᵢ), qui est causée par un courant de fuite de mesure (I_{Δn}) pondéré avec le facteur 2, la courbe d'hystérésis commence à dévier dans la plage de saturation.

3. Dispositif de protection selon l'une quelconque des revendications précédentes, **caractérisé en ce que** le noyau (18), par une fréquence du générateur (16) et par une intensité du champ (H) d'environ 10 mA/cm, présente une perméabilité ≥ 50000.

4. Dispositif de protection selon l'une quelconque des revendications précédentes, **caractérisé en ce que** le noyau (18) est réalisé en tant que noyau F avec une courbe d'hystérésis plate.

5. Dispositif de protection selon l'une quelconque des revendications précédentes, **caractérisé en ce que** la fréquence de résonnance du circuit de résonnance parallèle est accordée à la fréquence du générateur (f_{gen}).

6. Dispositif de protection selon la revendication 5, **caractérisé en ce qu'**un élément (28) limiteur de tension, notamment une diode Transil, est prévu parallèlement au circuit de résonnance, et qu'un organe de découplage (26), notamment une résistance, est prévu entre le générateur (16) et l'enroulement de commande (6).

7. Dispositif de protection selon la revendication 6, **caractérisé en ce que** la tension de réponse de l'élément (28) limiteur de tension est légèrement supérieure à la tension de sortie du générateur (16).

8. Dispositif de protection selon l'une quelconque des revendications précédentes, **caractérisé en ce que** l'unité d'évaluation (8) présente une résistance de mesure (22) commune pour reconnaître aussi bien le courant de fuite continu lisse que le courant de fuite alternatif/le courant de fuite continu pulsé.

9. Dispositif de protection selon la revendication 8, **caractérisé en ce que** la résistance de mesure (22) peut être court-circuitée brièvement par l'intermédiaire d'un commutateur de protection contre les courts-circuits (30), notamment par l'intermédiaire d'un transistor, le temps du court-circuit étant notamment inférieur ou égal à 10 msec.

10. Dispositif de protection selon l'une quelconque des revendications précédentes, **caractérisé en ce que** la fréquence du générateur (16) est ≤ 100 Hz.

11. Dispositif de protection selon l'une quelconque des revendications précédentes, **caractérisé en ce que** le matériau du noyau (18) est de telle nature que le courant de fuite continu lisse supérieur à un courant de fuite continu de déclenchement entraîne une saturation de l'état de magnétisation du noyau (18), et **en ce qu'**avec le courant de fuite alternatif /le courant de fuite continu pulsé situé dans la plage d'un courant de fuite alternatif de déclenchement, l'état de magnétisation est inférieur à la saturation.
